# EUROPÄISCHE PATENTSCHRIFT

(11) **EP 0 743 930 B1**
(45) Veröffentlichungstag und Bekanntmachung des Hinweises auf die Patenterteilung: **12.07.2000**
(21) Anmeldenummer: 94907532.9
(22) Anmeldetag: 10.02.1994
(51) Int. Cl.: C05F 3/00, C05D 3/02, C05F 17/00, C05F 11/00, C05F 15/00

(54) **ENTSORGUNG VON GÜLLE**
LIQUID MANURE DISPOSAL
ELIMINATION DE PURIN

(43) Veröffentlichungstag der Anmeldung: 27.11.1996
(73) Patentinhaber: HP-CHEMIE PELZER RESEARCH & DEVELOPMENT Ltd., Waterford, County Waterford (IE)
(72) Erfinder: PELZER, Helmut, D-58454 Witten (DE)
(74) Vertreter: Jönsson, Hans-Peter, Dr.Dipl.-Chem.
(86) Internationale Anmeldenummer: EP9400378
(87) Internationale Veröffentlichungsnummer: WO9521803

(56) Entgegenhaltungen:
- CH-A- 672 485
- DE-A- 4 119 504
- DE-C- 3 833 178
- FR-A- 2 156 888
- DATABASE WPI Section Ch, Week 8008, Derwent Publications Ltd., London, GB; Class C04, AN 80-14473C & SE,A,7 801 789 (INST INNOVATIONSTEK) 17. September 1979

## Beschreibung

Gegenstand der Erfindung ist ein Verfahren zur Entsorgung von Gülle sowie deren Verwendung.

Die Verwertung von Gülle aus Massentierhaltung, inbesondere von Schweinen, Hühnern und Rindern, stellt ein großes landwirtschaftliches Problem mit erheblichen ökologischen Schwierigkeiten dar. Zuweilen wird durch die Verwertung von Gülle auf landwirtschaftlich genutzten Flächen eine Veränderung in der Bodenfauna und -flora beobachtet. Darüber hinaus ist die hohe Belastung von Grundwasser mit Phosphaten und Nitraten hinlänglich bekannt, die durch den hohen Wassergehalt zu einem schnellen Eindringen in das Erdreich führt. Der hohe Wassergehalt der Gülle führt im Gegensatz zu üblichen künstlichen und natürlich festen Düngemitteln dazu, daß der Nährstoffgehalt nicht vollständig den Pflanzen zur Verfügung steht, sondern ungenutzt in tiefere Schichten des Erdreiches eindringt.

Bei Grundwässern wird durch die starke Anreichung mit Nitraten, insbesondere bei Ausbringung der Gülle außerhalb der Vegetationsperiode eine immer aufwendigere Behandlung von daraus gewonnenem Trinkwasser erforderlich, was zu den steigenden Kosten der Trinkwasserbereitung beiträgt. Darüber hinaus ist bekannt, daß bei Nitratwerten von oberhalb 50 mg/l auch gesundheitliche Beeinträchtigungen beim Trinkwassergenuß zu befürchten sind.

Gesetzliche Verordnungen legen fest, Gülle nur zu bestimmten Zeiten der Vegetationsperiode auszubringen. Damit soll sichergestellt werden, daß die durch Pflanzen verwertbaren Düngebestandteile optimal genutzt werden und eine Verschleppung von Nitrat- und Phosphationen in das Grundwasser oder die Oberflächenwasser erheblich reduziert wird.

Nachteilig für die betroffenen Produktionsbetriebe ist damit die Notwendigkeit, Gülle aus der Massentierhaltung für einen sehr langen Zeitraum zwischenzulagern, die dann erst in der Vegetationsperiode ausgebracht werden kann.

In vielfältigen Verfahren und Prozessen mit teilweise erheblichem technischem Aufwand wurde daher im Stand der Technik versucht, diese Situation zu entschärfen. In der EP-0 538 561 A1 und dem darin referierten Stand der Technik werden eine Reihe von verschiedenen Verfahren zur Entsorgung von Gülle beschrieben, wobei insbesondere der Weg der Trocknung, der biologischen Aufarbeitung, der Sorption an Substraten wie Holz, Stroh, Häcksel und anderen Materialien eine besondere Bedeutung zukommt, um die Gülle in handhabbare Form zu bringen oder deponiefähig zu machen.

So wird in der EP-0 538 561 A1 ein Verfahren zur Entsorgung von Abfallstoffen wie Güllen oder kommunalen Klärschlämmen durch Ammoniak-emissionsfreie Herstellung von festen, stabilen und sterilen Produkten zur Verwendung als Humus, Filterhumus, Naturdünger, Bodenverbesserer oder lagerfähiger Brennstoff durch Einmischung von biologischen Abfallstoffen, wie Langgras, Stroh, Sägemehl nach spezieller Rezeptur und Feuchte mittels mobiler Mischanlage und Ausschnecken des Mischansatzes zu einem Haufwerk beschrieben. Dieses Haufwerk in Höhe von etwa 3.00 m, beliebiger Breite und Länge, wird in einer Art biologischem Reaktor, der zum Beispiel auch Sägemehl sein kann, eingehaust und darf nicht umgesetzt werden. Nach etwa 4 bis 6 Monaten sind die Abfallstoffe derart abgebaut und umgewandelt, daß daraus ein torfähnliches Endprodukt entstanden ist, welches sich vorzüglich als Bodenverbesserer oder Brennstoff eignen soll.

Die adsorptive Bindung von Gülle an Sägemehl und zerkleinertem Stroh erfordert jedoch eine sehr große Menge an Stroh und Sägemehl, da die Auf saugwirkung von Stroh und Sägemehl relativ gering ist. Dementsprechend ist es erforderlich, relativ große Mengen an Stroh und Sägemehl mit Gülle zu vermischen, so daß der Wirtschaftlichkeit dieses Verfahrens Grenzen gesetzt sind.

Database WPI, Section Ch, Week 8008, Derwent Publications Ltd., London, GB; Class C04, AN 80-14473C & SE,A,7 801 789 beschreibt ein Verfahren zur Herstellung von Düngemittel-Pellets durch Mischen von Schlamm- und Abfallmaterial, durch Homogenisieren, Pelletisieren und Lufttrocknen der Zusammensetzung. Das Abfallmaterial kann dabei aus geschreddertem Papier, Borke, Haushaltsabfällen, Wollfaser, Ernteabfällen oder stabiler Gülle bestehen.

CH 672 485 A5 beschreibt ein Verfahren zur Verfestigung von Flüssigkeiten, insbesondere Gülle mit einem faserartigen Material. Als Fasern können beispielsweise eingesetzt werden, Holzabfälle, Sägespäne oder auch Rindenbestandteile.

Die Aufgabe der vorliegenden Erfindung besteht darin, gegenüber dem eingangs genannten Stand der Technik, durch Nutzung von verfügbaren Sekundärrohstoffen ein Verfahren zur Entsorgung von Gülle zur Verfügung zu stellen, daß verschiedene bekannte Nachteile des Standes der Technik ausgleicht und darüber hinaus möglichst landwirtschaftsnahe Methoden und Technologien verwendet.

Die vorgenannte Aufgabe wird erfindungsgemäß gelöst durch ein Verfahren zur Entsorgung von Gülle durch Kompostieren einer Mischung aus Gülle und festem Trägermaterial, dadurch gekennzeichnet, daß man Gülle, Zellstoffasermaterial ausgewählt aus unbedrucktem Kraftpapier, Wellpappe und/oder Schrenzpappen sowie gegebenenfalls Zuschlagsstoffe zu einer festen Krümel- und/oder Granulatform vermischt, anschließend der Kompostierung und gegebenenfalls einer zusätzlichen Trocknung unterwirft, wobei die Gewichtsverhältnisse von Gülle zu Zellstoffasermaterial im Bereich von 65 bis 85 Gew.-% und 35 bis 15 Gew.-% Zellstoffasermaterial im Falle der Anwesenheit von Zuschlagsstoffen im Bereich von 50 bis 80 Gew.-% Gülle, 30 bis 15 Gew.-% Zellstoffasermaterial und bis 30 Gew.-% Zuschlagsstoffe eingestellt sind.

Erfindungsgemäß wurde gefunden, daß die Flüssigkeitsaufnahmefähigkeit von Zellstoffasermaterial aus unbedrucktem Kraftpapier, Wellpappe und/oder Schrenzpappe die Verwendung dieser Materialien zur Entsorgung von Gülle außerordentlich geeignet macht. Es wurden daher mit unterschiedlichen Herkünften solche Materialien nach Auflösung in feinteilige Form oder Faserformmischungen mit Gülle aus verschiedenen Massentierhaltungen hergestellt.

Als besonders bevorzugt im Sinne der vorliegenden Erfindung hat sich die sogenannte "Braunware" herausgestellt. Die auf Kraftpapier basierende Wellpappe, die im Verpackungs- und Umverpackungsbereich häufig eingesetzt wird, ist in der Regel weder durch Gebrauch noch durch die Herstellungsart mit toxischen Fremdstoffen in bedenklicher Weise vorbelastet. Auch teilweise auf "Schrenzpappen" aufgebaute Ware läßt sich erfindungsgemäß besonders gut einsetzen. Hier ist jedoch die Vorbelastung der Materialien jeweils zu bedenken und gegebenenfalls vor der Anwendung zu überprüfen.

Das erfindungsgemäße Verfahren ist prinzipiell für verschiedene Güllearten einsetzbar. Besonders bevorzugt wird das erfindungsgemäße Verfahren jedoch eingesetzt für die Entsorgung von Schweinegülle, Hühnergülle und/oder Rindergülle.

Die Krümel- und/oder Granulatform bestehend aus Gülle und Zellstoffasermaterial kann darüber hinaus weitere Zuschlagsstoffe enthalten. Hierbei kommen insbesondere Rohstoffe aus dem Sekundärkreislauf in Betracht. Besonders bevorzugt in diesem Sinne sind Rauchgasentschwefelungsanlagen-Gips (REA-Gips) sowie Filterstäube aus Braunkohlenteuerungsanlagen. Darüber hinaus können während des Vermischens von Gülle mit dem Zellstofffasermaterial zur Verminderung der Emmission von Ammoniak und den dadurch möglichen Verlusten an Nährstoffen weitere Zuschlagsstoffe eingesetzt werden, so daß eine Nitrifikation/Denitrifikation systemintegriert wird.

Die Verfahrensweise zur Herstellung der Krümel- und/oder Granulatform ist technisch einfach zu realisieren. Zunächst wird das vornehmlich aus dem Sekundärrohstoffbereich stammende Zellstofffasermaterial auf Mühlen, Reißern oder ähnlichen Vorrichtungen in eine geeignete Form zerkleinert. Günstig ist hierbei eine möglichst faserförmige Auflösung. Prinzipiell kann aber auch staub- bis stückiges Gut eingesetzt werden. Die Art und Zusammensetzung der Rezeptur ist jeweils auf die eingesetzten Rohstoffe abzustimmen. Alle Fraktionen aus Mahlprozessen oder Reißern lassen mit bekannten Förder- und Dosiervorrichtungen transportieren und dosieren. Analog dazu ist es möglich, das Zellstoffasermaterial ohne mechanische Zerkleinerung mit Wasser aufzulösen oder Papier aus Deinkprozessen direkt einzusetzen. Verunreinigungen des Rohstoffs durch Schwermetalle oder Farbstoffreste können durch bekannte Aufbereitungsverfahren beseitigt werden.

So vorbereitet wird das Zellstoffasermaterial mit der in flüssiger Form vorliegenden Gülle gemischt. Das Mischungsverhältnis von Zellstoffasermaterial zu Gülle wird so eingestellt, daß ein Krümel- bis Granulat-ähnliches Mischgut entsteht. Besonders bevorzugt im Sinne der vorliegenden Erfindung ist es, daß Gewichtsverhältnis von Gülle zu Zellstoffasermaterial im Bereich von 75 bis 85 Gew.-% Gülle und 25 bis 15 Gew.-% Zellstoffasermaterial einzustellen. Wird das Verhältnis von Gülle zu Zellstofffasermaterial zugunsten der Gülle verschoben, so ist keine feste Krümel- und/oder Granulatform zu erhalten. Wird hingegen das Verhältnis von Gülle zu Zellstoffasermaterial zu klein eingesetzt, vermindert sich die Wirtschaftlichkeit des Verfahrens zur Entsorgung von Gülle.

Für den Fall, daß neben der Gülle und Zellstoffasermaterial noch weitere Zuschlagsstoffe eingesetzt werden, ist es im Sinne der vorliegenden Erfindung besonders bevorzugt, die Gewichtsverhältnisse von Gülle zu Zellstoffasermaterial und Zuschlagsstoffen im Bereich von 65 bis 75 Gew.-% Gülle, 25 bis 20 Gew.-% Zellstoffasermaterial und 5 bis 20 Gew.-% Zuschlagsstoffen einzustellen.

Als Mischer für die Gülle, das Zellstoffasermaterial und gegebenenfalls die Zusatzstoffe können einfache Anker-, Löffel- oder Hakenmischer mit Mischtrommeln als kontinuierliche Mischer mit Knet- und/oder Hakenelementen sowie automatische Flüssigkeitsdosierung eingesetzt werden. Solche, im Stand der Technik bekannten, geschlossenen Mischeinrichtungen werden vorzugsweise im Sinne der vorliegenden Erfindung eingesetzt, da Verluste und Emmissionen an flüchtigen Bestandteilen wie Ammoniak und organischen Säuren möglichst vermieden werden sollten, wobei darüber hinaus während der Vermischung auch eine für den späteren Rotteprozess günstige Temperatur durch Friktion oder externe Temperierung eingestellt werden kann.

Besonders bevorzugt im Sinne der vorliegenden Erfindung ist es, das Gewichtsverhältnis von Gülle, Zellstoffasermaterial, Rauchgasentschwefelungs-Gips und Filterstaub im Bereich von 50 bis 80 Gew.-%, insbesondere 65 bis 75 Gew.-% Gülle, 16 bis 30 Gew.-%, insbesondere 13 bis 27 Gew.-% Zellstoffasermaterial, 2 bis 10 Gew.-%, insbesondere 4 bis 6 Gew.-% Rauchgasentschwefelungs-Gips und 2 bis 10 Gew.-%, insbesondere 4 bis 6 Gew.-% Filterstäuben einzustellen.

In der zweiten Verfahrensstufe des erfindungsgemäßen Verfahrens wird das in fester Krümel- und/oder Granulatform vorliegende Gemisch aus Gülle, Zellstoffasermaterial, das gegebenenfalls Zuschlagsstoffe enthält, der Kompostierung unterworfen. Hierbei wird das Mischgut einer mikrobiologischen Behandlung in der Form unterworfen, wobei zum einen konventionelle Mieten, wie aus der Landwirtschaft bekannt, aufgebaut werden, die dann über einen Zeitraum von beispielsweise 4 bis 12 Wochen einer Rotte unterworfen werden. Hierbei steigt die Temperatur innerhalb der Rotte auf Werte von 70 bis 80 °C an. Darüber hinaus ist es im gleicher Weise möglich, moderne Rotteverfahren in sogenannten Trommelrotten einzusetzen. Die Beendigung des Rotteverfahrens kann nach an sich bekannten Verfahren bestimmt werden. Für jedes der genannten Verfahren ist jedoch die Mischung, als auch die erforderliche Auswahl von gegebenenfalls einzusetzenden Zuschlagsstoffen optimierbar. Aus Gründen der Emmission von Ammoniak und den dadurch bedingten Verlusten an Nährstoffen sind entweder biologische Abluftfilter einzusetzen oder die Umsetzung durch Zuschlagsstoffe und angepaßte Verfahrenswahl so zu steuern, daß eine Nitrifikation/Denitrifikation systemintegriert wird.

Nach Abschluß des Rotteprozesses, dessen Ende insbesondere durch Beprobung und Temperaturkontrolle feststellbar ist, wird das fertige Produkt gegebenenfalls einer Trocknung unterworfen. Während die Rotte in üblichen Mieten innerhalb eines Zeitraums von 4 bis 12 Wochen abgeschlossen ist, stellt die Rotte in sogenannten Rottetrommeln ein Intensivrotteverfahren dar, bei dem die Vorrotte innerhalb von 8 bis 14 Tagen und die Nachrotte innerhalb von 3 bis 6 Wochen erfolgt.

Erfindungsgemäß wird ein Feuchtegehalt von weniger als 20 Gew.-%, insbesondere weniger als 15 Gew.-% angestrebt, damit eine Handhabung und Lagerung der festen Krümel- und/oder Granulatform möglich ist. Darüber hinaus soll ein sonst zu schnell einsetzende Pilzbildung unterbunden werden. Als Teilenergie ist es selbstverständlich auch möglich, die Abwärme aus dem Rotteprozess zu benutzen. Vorzugsweise wird das Rotteverfahren vor Umwelteinflüssen wie Regenwasser geschützt, damit eine schnelle Trocknung erfolgen kann.

Ein erfindungsgemäß hergestelltes Produkt ist lager-, transport- und handhabungsfähig, liegt je nach Herstellungs- und Aufarbeitungsart als krümeliger, granulatähnlicher, praktisch geruchsfreier Düngestoff vor, der sich mit den üblichen landwirtschaftlichen Arbeitsgeräten ausbringen läßt. Von besonderem Vorteil ist bei der erfindungsgemäßen Mischung aus Zellstoffasermaterial, Gülle und gegebenenfalls Zuschlagsstoffen, die verzögerte Abgabe von Düngemittelbestandteilen, insbesondere Nitraten und Phosphaten bei simulierten Eluierungsversuchen. In Wasser gegeben, zeigt das Produkt wenig Neigung zur Auflösung, so daß die Nährstoffverfügung für Pflanzen in den oberen Bodenschichten über eine längeren Zeitraum als bei der direkten Anwendung von Gülle in flüssiger Form gegeben ist. Zudem bewirkt die Struktur einen Bodenauflockernden Effekt, wodurch Bodenbelüftung und damit Bodenbiologie begünstigt wird. Dementsprechend ist es im Sinne der vorliegenden Erfindung besonders bevorzugt, das Gemisch aus Gülle, Zellstoffasermaterial und gegebenenfalls Zuschlagsstoffen als Humus, Filterhumus, Düngemittel, Bodenverbesserer oder lagerfähigen Brennstoff einzusetzen.

## Patentansprüche

1. Verfahren zur Entsorgung von Gülle durch Kompostieren einer Mischung aus Gülle und festem Trägermaterial, dadurch gekennzeichnet, daß man Gülle, Zellstoffasermaterial ausgewählt aus unbedrucktem Kraftpapier, Wellpappe und/oder Schrenzpappen sowie gegebenenfalls Zuschlagsstoffe zu einer festen Krümel- und/oder Granulatform vermischt, anschließend der Kompostierung und gegebenenfalls einer zusätzlichen Trocknung unterwirft, wobei die Gewichtsverhältnisse von Gülle zu Zellstoffasermaterial im Bereich von 65 bis 85 Gew.-% und 35 bis 15 Gew.-% Zellstoffasermaterial und im Falle der Anwesenheit von Zuschlagsstoffen im Bereich von 50 bis 80 Gew.-% Gülle, 30 bis 15 Gew.-% Zellstoffasermaterial und bis 30 Gew.-% Zuschlagsstoffe eingestellt sind.

2. Verfahren nach Anspruch 1, dadurch gekennzeichnet, daß die Gülle ausgewählt ist aus Schweinegülle, Hühnergülle und/oder Rindergülle.

3. Verfahren nach Anspruch 1, dadurch gekennzeichnet, daß man die Zuschlagsstoffe auswählt aus Rauchgasentschwefelungsanlagen-Gips und Filterstäuben aus Braunkohlenfeuerungsanlagen.

4. Verfahren nach Anspruch 1, dadurch gekennzeichnet, daß die Gewichtsverhältnisse von Gülle zu Zellstoffasermaterial im Bereich 75 bis 85 Gew.-% Gülle und 25 bis 15 Gew.-% Zellstoffasermaterial eingestellt sind.

5. Verfahren nach Anspruch 1, dadurch gekennzeichnet, daß die Gewichtsverhältnisse von Gülle zu Zellstoffasermaterial und Zuschlagsstoffen im Bereich von 65 bis 75 Gew.-% Gülle, 25 bis 20 Gew.-% Zellstoffasermaterial und 5 bis 20 Gew.-% Zuschlagsstoffen betragen.

6. Verfahren nach Anspruch 1, dadurch gekennzeichnet, daß man die Gewichtsverhälnisse von Gülle, Zellstoff, Rauchgasentschwefelungs-Gips und Filterstäuben im Bereich von 50 bis 80 Gew.-%, insbesondere 65 bis 75 Gew.-% Gülle, 16 bis 30 Gew.-%, insbesondere 13 bis 27 Gew.-% Zellstoffasermaterial, 2 bis 10 Gew.-%, insbesondere 4 bis 6 Gew.-% Rauchgasentschwefelungs-Gips und 2 bis 10 Gew.-%, insbesondere 4 bis 6 Gew.-% Filterstäube einstellt.

7. Verfahren nach einem oder mehreren der Ansprüche 1 bis 6, dadurch gekennzeichnet, daß man das Gemisch in Krümel- und/oder Granulatform in Mieten über einen Zeitraum von 4 bis 12 Wochen der Rotte unterwirft.

8. Verfahren nach einem oder mehreren der Ansprüche 1 bis 7, dadurch gekennzeichnet, daß man das kompostierte Gemisch auf einen Feuchtegehalt von weniger als 20 Gew.-%, insbesondere weniger als 15 Gew.-% , gegebenenfalls durch zusätzliche Trocknung einstellt.

## Claims

1. A process for the disposal of liquid manure by composting a mixture of liquid manure and a solid substrate material, characterized in that liquid manure, pulp fiber material selected from unprinted kraft paper, corrugated paperboard and/or screenings board and optionally aggregates are mixed into a solid crumb and/or granular form, then subjected to composting and optionally an additional drying operation, the weight ratios of liquid manure to pulp fiber material being adjusted to within a range of from 65% to 85% by weight of liquid manure and from 35% to 15% by weight of pulp fiber material, and if aggregates are present, to within a range of from 50% to 80% by weight of liquid manure, from 30% to 15% by weight of pulp fiber material, and up to 30% by weight of aggregates.

2. The process according to claim 1, characterized in that said liquid manure is selected from hog liquid manure, chicken liquid manure, and/or cattle liquid manure.

3. The process according to claim 1, characterized in that said aggregates are selected from flue gas desulfurication gypsum and filter dusts from brown coal furnaces.

4. The process according to claim 1, characterized in that said weight ratios of liquid manure to pulp fiber material are adjusted to within a range of from 75% to 85% by weight of liquid manure and from 25% to 15% by weight of pulp fiber material.

5. The process according to claim 1, characterized in that said weight ratios of liquid manure to pulp fiber material and aggregates are within a range of from 65% to 75% by weight of liquid manure, from 25% to 20% by weight of pulp fiber material, and from 5% to 20% by weight of aggregates.

6. The process according to claim 1, characterized in that said weight ratios of liquid manure, pulp fiber material, flue gas desulfurication gypsum and filter dusts are adjusted to within a range of from 50% to 80% by weight, especially from 65% to 75% by weight, of liquid manure, from 16% to 30% by weight, especially from 13% to 27% by weight, of pulp fiber material, from 2% to 10% by weight, especially from 4% to 6% by weight, of flue gas desulfurication gypsum, and from 2% to 10% by weight, especially from 4% to 6% by weight, of filter dusts.

7. The process according to one or more of claims 1 to 6, characterized in that said mixture present in a crumb and/or granular form is subjected to rotting in clamps over a period of from 4 to 12 weeks.

8. The process according to one or more of claims 1 to 7, characterized in that the composted mixture is adjusted to a moisture content of less than 20% by weight, especially less than 15% by weight, by additional drying, if necessary.

## Revendications

1. Procédé d'élimination du lisier par compostage d'un mélange de lisier et d'un matériau support solide, caractérisé en ce qu'on mélange du lisier, une matière fibreuse cellulosique choisie parmi le papier kraft non-imprimé, le carton ondulé et/ou le carton gris, et éventuellement des granulats, pour obtenir une forme solide en grumeaux et/ou granulés, que l'on soumet ensuite au compostage et éventuellement à un séchage supplémentaire, les proportions pondérales du lisier et de la matière fibreuse cellulosique étant ajustées entre 65 et 85 % en poids de lisier entre 35 et 15 % en poids de matière fibreuse cellulosique, et en présence de granulats, entre 50 et 80 % en poids de lisier, 30 et 15 % en poids de matière fibreuse cellulosique et jusqu'à 30 % en poids de granulats.

2. Procédé selon la revendication 1, caractérisé en ce que le lisier est choisi parmi le lisier de porcins, le lisier de volailles et/ou le lisier de bovins.

3. Procédé selon la revendication 1, caractérisé en ce qu'on choisit les granulats parmi le gypse des installations de désulfuration des fumées et les poussières de filtration provenant des installations de chauffe de la tourbe.

4. Procédé selon la revendication 1, caractérisé en ce que les proportions pondérales du lisier et de la matière fibreuse cellulosique sont ajustées entre 75 et 85 % en poids de lisier entre 25 et 15 % en poids de matière fibreuse cellulosique.

5. Procédé selon la revendication 1, caractérisé en ce que les proportions pondérales du lisier, de la matière fibreuse cellulosique et des granulats sont comprises dans la gamine de 65 à 75 % en poids de lisier, de 25 à 20 % en poids de matière fibreuse cellulosique et de 5 à 20 % en poids de granulats.

6. Procédé selon la revendication 1, caractérisé en ce qu'on ajuste les proportions pondérales du lisier, de la matière cellulosique, du gypse des installations de désulfuration des fumées et des poussières de filtration dans la gamme de 50 à 80 % en poids, en particulier de 65 à 75 % en poids de lisier, de 16 à 30 % en poids, en particulier de 13 à 27 % en poids de matière fibreuse cellulosique, de 2 à 10 % en poids, en particulier de 4 à 6 % en poids de gypse des installations de désulfuration des fumées, et de 2 à 10 % en poids, en particulier de 4 à 6 % en poids de poussières de filtration.

7. Procédé selon l'une ou plusieurs des revendications 1 à 6, caractérisé on ce qu'on soumet à une putréfaction le mélange sous forme de grumeaux et/ou de granulés, dans des silos-meules sur un laps de temps de 4 à 12 semaines.

8. Procédé selon l'une ou plusieurs des revendications 1 à 7, caractérisé on ce qu'on ajuste la teneur on humidité du mélange composté à une valeur inférieure à 20 % en poids, en particulier inférieure à 15 % en poids, éventuellement grâce à un séchage supplémentaire.
